# EUROPÄISCHE PATENTSCHRIFT

(11) **EP 3 825 589 B1**
(45) Veröffentlichungstag und Bekanntmachung des Hinweises auf die Patenterteilung: **06.12.2023**
(21) Anmeldenummer: 20201656.4
(22) Anmeldetag: 14.10.2020
(51) Int. Cl.: F16K 11/044, F16K 31/02, F01P 7/14, F03G 7/06

(54) **VENTIL**
VALVE
SOUPAPE

(30) Priorität: 19.11.2019 DE 102019131161
(43) Veröffentlichungstag der Anmeldung: 26.05.2021
(73) Patentinhaber: Eberspächer Climate Control Systems GmbH, 73730 Esslingen (DE)
(72) Erfinder: Humburg, Michael, 73035 Göppingen (DE); Jensen, Hans, 73265 Dettingen (DE)
(74) Vertreter: Ruttensperger Lachnit Trossin Gomoll

(56) Entgegenhaltungen:
- EP-A2- 0 959 282
- DE-A1-102017 010 391
- DE-A1-102018 107 972
- JP-A- H0 727 251
- JP-A- 2006 138 235
- US-A- 5 211 371
- US-A1- 2008 251 044

## Beschreibung

Die vorliegende Erfindung betrifft ein Ventil, welches beispielsweise in einem Wärmeträgermedium-Strömungskreislauf in einem Fahrzeug zum Freigeben und Unterbrechen eines oder mehrerer Strömungswege eingesetzt werden kann.

Bei Fahrzeugen, in welchen Wärmeträgermedium-Strömungskreisläufe für das Wärmemanagement eingesetzt werden, um vermittels eines im allgemeinen flüssigen Wärmeträgermediums Wärme von bestimmten Systembereichen, wie zum Beispiel Batterien, einer Standheizung bzw. einem Zuheizer oder einer Brennkraftmaschine, abzuführen oder/und Wärme auf andere Systembereiche, wie zum Beispiel einen Fahrzeuginnenraum, zu übertragen, werden im Allgemeinen elektrisch erregte Magnetventile eingesetzt, um beispielsweise temperaturabhängig verschiedene Strömungswege freizugeben oder zu unterbrechen. Derartige Magnetventile sind vergleichsweise schwer und beanspruchen aufgrund der Notwendigkeit, eine Anker/Spule-Baugruppe unterzubringen, vergleichsweise großen Bauraum.

Bei einem aus der EP 0 959 282 A2 bekannten Ventil ist ein zwei Ventilelemente bereitstellendes Ventilorgan durch ein erstes Formgedächtnismaterial-Stellorgan in einer ersten Bewegungsrichtung beaufschlagbar, um ein erstes Ventilelement des Ventilorgans gegen einen diesem zugeordneten ersten Ventilsitz zu pressen. Durch ein zweites Formgedächtnis-Stellorgan ist das Ventilorgan in einer der ersten Bewegungsrichtung entgegengesetzten zweiten Bewegungsrichtung beaufschlagbar, um ein zweites Ventilelement des Ventilorgans gegen einen diesem zugeordneten zweiten Ventilsitz zu pressen und dabei das erste Ventilelement von dem diesem zugeordneten ersten Ventilsitz abzuheben.

Die DE 10 2017 010 391 A1 offenbart ein Ventil, bei welchem ein zwei Ventilelemente bereitstellendes Ventilorgan durch eine eine Schraubenfeder umfassende Vorspannanordnung in einer ersten Bewegungsrichtung beaufschlagt ist, um ein erstes Ventilelement des Ventilorgans gegen einen diesem zugeordneten ersten Ventilsitz zu pressen. Durch ein Formgedächtnis-Stellorgan ist das Ventilorgan in einer der ersten Bewegungsrichtung entgegengesetzten zweiten Bewegungsrichtung beaufschlagbar, um ein zweites Ventilelement des Ventilorgans gegen einen diesem zugeordneten zweiten Ventilsitz zu pressen und dabei das erste Ventilelement von dem diesem zugeordneten ersten Ventilsitz abzuheben.

Die JP H07 27251A offenbart ein Ventil mit einem ein einziges Ventilelement bereitstellenden Ventilorgan. Durch eine eine Schraubenfeder umfassende Vorspannanordnung ist das Ventilorgan in einer ersten Bewegungsrichtung beaufschlagt, um das Ventilelement des Ventilorgans gegen einen diesem zugeordneten Ventilsitz zu pressen. Durch zwei seriell angeordnete und zueinander seriell wirkende Formgedächtnis-Stellorgane ist das Ventilorgan in einer der ersten Bewegungsrichtung entgegengesetzten zweiten Bewegungsrichtung beaufschlagbar, um das Ventilelement des Ventilorgans von dem diesem zugeordneten Ventilsitz abzuheben.

Ein Ventil gemäß dem Oberbegriff des Anspruchs 1 ist aus der JP 2006 138235 A bekannt.

Es ist die Aufgabe der vorliegenden Erfindung, ein einfach und kompakt aufgebautes und betriebssicheres Ventil insbesondere für einen Wärmeträgermedium-Strömungskreislauf in einem Fahrzeug vorzusehen.

Gemäß der vorliegenden Erfindung wird diese Aufgabe gelöst durch ein Ventil, insbesondere für einen Wärmeträgermedium-Strömungskreislauf in einem Fahrzeug, gemäß Anspruch 1, umfassend wenigstens ein Ventilorgan und eine dem wenigstens einen Ventilorgan zugeordnete Aktuatoranordnung mit wenigstens zwei Formgedächtnismaterial-Stellorganen.

Der Einsatz einer Aktuatoranordnung mit wenigstens zwei Formgedächtnismaterial-Stellorganen ermöglicht eine kompakte Bauart und einen ausfallsicheren Betrieb eines derartigen Ventils, wobei dadurch, dass die Aktuatoranordnung wenigstens zwei Formgedächtnismaterial-Stellorgane umfasst, einen weiter vergrößerter Einsatzbereich erreicht wird.

Das wenigstens eine Ventilorgan ist durch die wenigstens zwei Formgedächtnismaterial-Stellorgane zur Bewegung in der gleichen Bewegungsrichtung in unterschiedlichem Bewegungsausmaß beaufschlagbar. Dies kann bedeuten, dass beispielsweise die Formgedächtnismaterial-Stellorgane in unterschiedlichem Ausmaß in ihrer Form veränderbar, insbesondere ausdehnbar, sind und dadurch jeweils unterschiedliche Bewegungsausmaße des wenigstens einen Ventilorgans bewirken können, oder dass abhängig davon, ob nur eines der Formgedächtnismaterial-Stellorgane aktiviert wird oder zwei oder mehrere Formgedächtnismaterial-Stellorgane aktiviert werden, unterschiedliche Bewegungskräfte erzeugt werden, die dann ein unterschiedliches Bewegungsausmaß des wenigstens einen Ventilorgans hervorrufen.

Das wenigstens eine Ventilorgan umfasst ein erstes Ventilelement, wobei in einer ersten Ventilstellung das erste Ventilelement auf einem dem ersten Ventilelement zugeordneten ersten Ventilsitz aufsitzt und in einer zweiten Ventilstellung von dem ersten Ventilsitz abgehoben ist. Somit kann in der ersten Ventilstellung durch das erste Ventilelement eine Strömungsverbindung zwischen einem ersten Leitungsbereich und einem zweiten Leitungsbereich unterbrochen werden, während in der zweiten Ventilstellung diese Strömungsverbindung freigegeben ist.

Bei einem nach Art eines 3/2-Wege-Ventils aufgebauten Ventil umfasst das Ventilorgan ein zweites Ventilelement, wobei das zweite Ventilelement in der ersten Ventilstellung von einem dem zweiten Ventilelement zugeordneten zweiten Ventilsitz abgehoben ist und in der zweiten Ventilstellung auf dem zweiten Ventilsitz aufsitzt. In der zweiten Ventilstellung kann somit das zweite Ventilelement eine Strömungsverbindung zwischen dem ersten Leitungsbereich und einem dritten Leitungsbereich unterbrechen, während in der ersten Ventilstellung diese Strömungsverbindung freigegeben ist, jedoch die Strömungsverbindung zwischen dem ersten Leitungsbereich und dem zweiten Leitungsbereich unterbrochen ist.

Um ein derartiges Ventil zwischen verschiedenen Ventilstellungen umschalten zu können, umfasst die Aktuatoranordnung eine Vorspanneinheit zum Vorspannen des wenigstens einen Ventilorgans in einer ersten Stellrichtung, und die wenigstens zwei Formgedächtnismaterial-Stellorgane sind dazu ausgebildet, das wenigstens eine Ventilorgan entgegen der Vorspannwirkung der Vorspanneinheit in einer zweiten Stellrichtung zu verstellen. Das wenigstens eine Ventilorgan ist durch die Vorspannanordnung in die erste Ventilstellung vorgespannt.

Bei einer die kompakte Bauart unterstützenden, betriebssicheren Ausgestaltung kann die Vorspanneinheit wenigstens eine Vorspannfeder, vorzugsweise Schraubendruckfeder, umfassen.

Um mit technisch einfachen Maßnahmen die Formänderung des wenigstens einen Formgedächtnismaterial-Stellorgans bewirken zu können, wird vorgeschlagen, dass dieses durch Temperaturänderung in seiner Form veränderbar ist.

Dabei ist es besonders vorteilhaft, wenn die Temperatur des wenigstens einen Formgedächtnismaterial-Stellorgans durch Bestromung des wenigstens einen Formgedächtnismaterial-Stellorgans veränderbar ist. Die Erwärmung eines Formgedächtnismaterial-Stellorgans durch Bestromen desselben, also durch das Hindurchleiten eines elektrischen Stroms durch das Formgedächtnismaterial-Stellorgan selbst, führt zu einer sehr schnellen thermischen Reaktion und einer entsprechend schnellen Formänderung. Insbesondere kann dabei vorgesehen sein, dass das wenigstens eine Formgedächtnismaterial-Stellorgan dazu ausgebildet ist, das wenigstens eine Ventilorgan bei Erwärmung des wenigstens einen Formgedächtnismaterial-Stellorgans in der zweiten Stellrichtung zu verstellen.

Mit einem derartigen Aufbau der Aktuatoranordnung wird es möglich, dass das wenigstens eine Ventilorgan durch wenigstens eines der Formgedächtnismaterial-Stellorgane in eine dritte Ventilstellung stellbar ist, wobei in der dritten Ventilstellung das erste Ventilelement vom ersten Ventilsitz abgehoben ist und das zweite Ventilelement vom zweiten Ventilsitz abgehoben ist, und dass das wenigstens eine Ventilorgan durch ein anderes der Formgedächtnismaterial-Stellorgane oder durch ein mit dem einen Formgedächtnismaterial-Stellorgan zusammenwirkendes anderes Formgedächtnismaterial-Stellorgan in die zweite Ventilstellung stellbar ist. Dies bedeutet, dass in der dritten Ventilstellung, in welcher keines der Ventilelemente auf dem zugeordneten Ventilsitz aufsitzt, eine Strömungsverbindung von einem ersten Leitungsbereich sowohl zu einem zweiten Leitungsbereich als auch einem dritten Leitungsbereich freigegeben ist.

Um einen großen Stellweg erreichen zu können, sind die wenigstens zwei Formgedächtnismaterial-Stellorgane mit der Form einer Schraubenfeder aufgebaut.

Dabei sind für eine kompakte Bauart die wenigstens zwei Formgedächtnismaterial-Stellorgane ineinandergeschachtelt angeordnet.

Für eine baulich einfach zu realisierende Ausgestaltung wird vorgeschlagen, dass das wenigstens eine Ventilorgan durch das wenigstens eine Formgedächtnismaterial-Stellorgan linear verschiebbar ist.

Die vorliegende Erfindung wird nachfolgend mit Bezug auf die beiliegenden Figuren detailliert beschrieben. Es zeigt:
- Fig. 1: eine Schnittansicht eines als 2/1-Wege-Ventil aufgebauten, nicht erfindungsgemäßen Ventils für einen Wärmeträgermedium-Strömungskreislauf in einem Fahrzeug bei in einer ersten Ventilstellung positioniertem Ventilorgan;
- Fig. 2: das Ventil der Fig. 1 bei in einer zweiten Ventilstellung positioniertem Ventilorgan;
- Fig. 3: eine Schnittansicht eines als 3/2-Wege-Ventil aufgebautes, nicht erfindungsgemäßen Ventils für einen Wärmeträgermedium-Strömungskreislauf bei in einer ersten Ventilstellung positioniertem Ventilorgan,
- Fig. 4: das Ventil der Fig. 3 bei in einer zweiten Ventilstellung positioniertem Ventilorgan;
- Fig. 5: eine der Fig. 3 entsprechende Darstellung einer erfindungsgemäßen Ausgestaltungsart eines Ventils für einen Wärmeträgermedium-Strömungskreislauf in einem Fahrzeug bei in einer ersten Ventilstellung positioniertem Ventilorgan;
- Fig. 6: das Ventil der Fig. 5 bei in einer zweiten Ventilstellung positioniertem Ventilorgan;
- Fig. 7: das Ventil der Fig. 5 bei in einer dritten Ventilstellung positioniertem Ventilorgan.

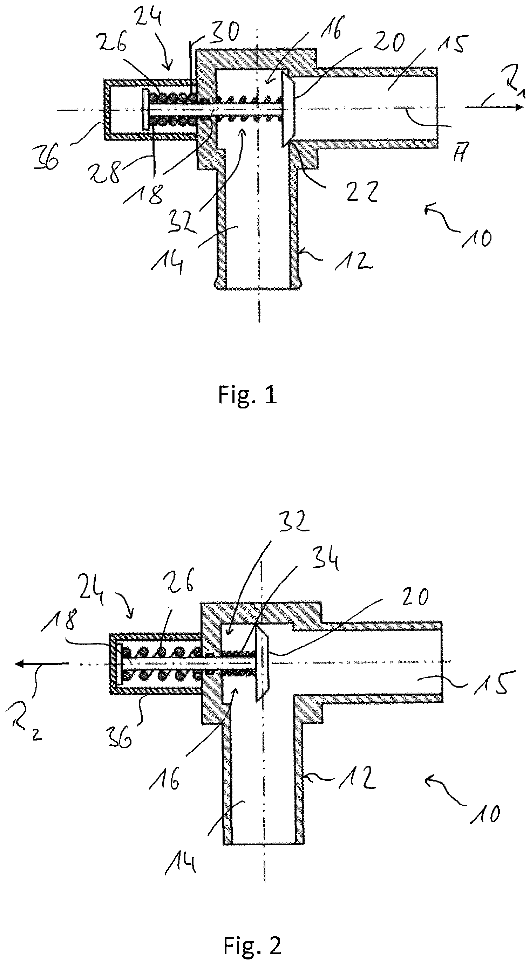

Die Fig. 1 zeigt in Schnittansicht ein Ventil 10, das beispielsweise in einem Wärmeträgermedium-Strömungskreislauf in einem Fahrzeug eingesetzt werden kann, um ein flüssiges Wärmeträgermedium, beispielsweise die Kühlflüssigkeit für eine Brennkraftmaschine, gezielt in verschiedene Leitungsbereiche zu leiten.

Das Ventil 10 umfasst ein Ventilgehäuse 12, in welchem zwei Leitungsbereiche 14, 15 gebildet sind. In dem Ventilgehäuse 12 ist ein allgemein mit 16 bezeichnetes Ventilorgan vorgesehen, das einen in Richtung einer Bewegungsachse A langgestreckten Ventilschieber 18 und ein im dargestellten Beispiel konisch geformtes erstes Ventilelement 20 aufweist. Im Sinne dieser nicht erfindungsgemäßen Ausgestaltungsform ist das im Folgenden im Zusammenhang mit dieser Ausgestaltungsform auch nur als Ventilelement bezeichnete Ventilelement 20 das einzige Ventilelement.

Im Ventilgehäuse 12 ist dem Ventilelement 20 ein beispielsweise entsprechend konisch oder kantenartig geformter Ventilsitz 22 zugeordnet. Bei Positionierung des Ventilorgans 16 in einer in Fig. 1 dargestellten ersten Ventilstellung sitzt das Ventilelement 20 auf dem zugeordneten Ventilsitz 22 auf und unterbricht somit eine Strömungsverbindung zwischen dem ersten Leitungsbereich 14 und dem zweiten Leitungsbereich 15

Zur Verstellung des Ventilorgans 16 ist diesem eine allgemein mit 24 bezeichnete Aktuatoranordnung zugeordnet. Die Aktuatoranordnung 24 umfasst im dargestellten Beispiel ein nach Art einer Schraubenfeder ausgebildetes Formgedächtnismaterial-Stellorgan 26. Das Formgedächtnismaterial-Stellorgan 26 ist mit einer elektrisch leitenden Formgedächtnislegierung aufgebaut, so dass durch Temperaturänderung und einem damit induzierten Übergang zwischen einem austenitischen Zustand und einem martensitischen Zustand eine Formänderung des Formgedächtnismaterial-Stellorgans 26 hervorgerufen werden kann.

Im dargestellten Ausgestaltungsbeispiel sind die beiden in Richtung der Bewegungsachse A gelegenen Endbereiche des beispielsweise elektrisch isolierten Formgedächtnismaterial-Stellorgans 26 an jeweilige elektrische Leitungen 28, 30 angeschlossen. Durch Anlegen einer elektrischen Spannung an die Leitungen 28, 30 wird ein Strom durch das Formgedächtnismaterial-Stellorgan 26 hindurchgeleitet, wodurch dieses erwärmt und in seinen austenitischen Zustand überführt werden kann. Dies führt dazu, dass das sich am Ventilgehäuse 12 abstützende Formgedächtnismaterial-Stellorgan 26 in einen in Fig. 2 dargestellten in Richtung der Bewegungsachse A ausgedehnten Zustand übergeht. Bei diesem Übergang verschiebt das Formgedächtnismaterial-Stellorgan 26 das Ventilorgan 16 in Richtung der Bewegungsachse A entgegen der Vorspannwirkung einer Vorspannanordnung 32, welche im dargestellten Ausgestaltungsbeispiel eine den Ventilschieber 18 umgebend angeordnete und am Ventilgehäuse 12 sowie am Ventilelement 20 des Ventilorgans 16 sich abstützende Vorspannfeder 34, zum Beispiel Schraubendruckfeder, umfassen kann. Da auch das Formgedächtnismaterial-Stellorgan 26 den Ventilschieber 18 des Ventilorgans 16 umgebend angeordnet ist, werden durch die Aktuatoranordnung 24 im Wesentlichen nur in Richtung der Bewegungsachse A wirkende Kräfte erzeugt bzw. in das Ventilorgan 16 eingeleitet, so dass dieses durch die Vorspannanordnung 32 in einer ersten Stellrichtung R₁ in Richtung zu der in Fig. 1 dargestellten ersten Ventilstellung vorgespannt ist und durch Bestromung des Formgedächtnismaterial-Stellorgans 26 und die dadurch hervorgerufene Ausdehnung desselben in einer zweiten Stellrichtung R₂ verstellbar ist, in welcher das Ventilelement 20 von dem diesem zugeordneten Ventilsitz 22 abgehoben ist und somit die Strömungsverbindung zwischen dem ersten Leitungsbereich 14 und dem zweiten Leitungsbereich 15 freigegeben ist. Voraussetzung für diese Funktion ist, dass die durch das Formgedächtnismaterial-Stellorgan 26 bei dessen durch eine Erwärmung hervorgerufene Ausdehnung generierte und in der zweiten Stellrichtung R₁ auf den Ventilschieber 18 einwirkende Kraft größer ist, als die durch die Vorspannfeder 34 erzeugte und in der ersten Stellrichtung R₁ wirkende Kraft.

Bei Verstellung des Ventilorgans 16 in die in Fig. 2 dargestellte zweite Ventilstellung kann ein Bewegungsanschlag beispielsweise durch ein auch das Formgedächtnismaterial-Stellorgan 26 umschließendes Aktuatorgehäuse 36 bereitgestellt sein, an welchem der Ventilschieber 18 zur Anlage kommen kann. Auch ein anders geformter Anschlag kann bereitgestellt sein. Grundsätzlich könnte auch die Vorspannanordnung 32 die Bewegung in der zweiten Stellrichtung R₂ beenden, entweder indem die Vorspannfeder 34 auf Block gesetzt wird oder durch diese eine derart große Vorspannkraft generiert wird, dass eine weitere Verschiebung durch das erwärmte und sich dabei ausdehnende Formgedächtnismaterial-Stellorgan 26 nicht hervorgerufen werden kann.

Soll das Ventil 10 wieder in den in Fig. 1 dargestellten Zustand gebracht werden, wird das Bestromen des Formgedächtnismaterial-Stellorgans 26 beendet, so dass dieses wieder abkühlt und sich auch unter der Einwirkung der Vorspannanordnung 32 bzw. durch den Übergang in den martensitischen Zustand wieder zusammenzieht.

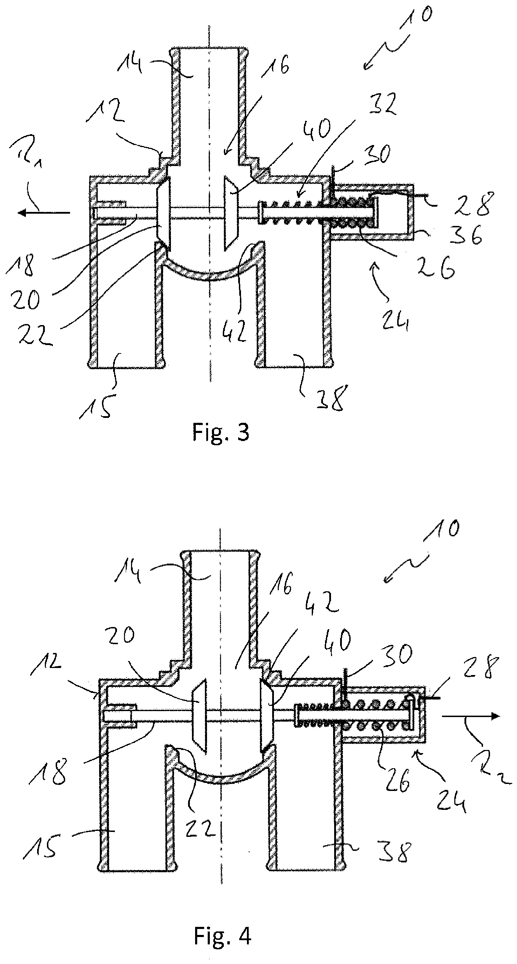

Die Fig. 3 und 4 zeigen ein nicht erfindungsgemäßes Ventil 10, bei welchem das Ventilgehäuse 12 neben dem ersten Leitungsbereich 14 und dem zweiten Leitungsbereich 15 noch einen dritten Leitungsbereich 38 bereitstellt. Das Ventilorgan 16 weist in diesem Ausgestaltungsbeispiel zwei Ventilelemente 20, 40 auf, wobei im Ventilgehäuse 12 jedem der beiden Ventilelemente 20, 40 jeweils ein Ventilsitz 22, 42 zugeordnet ist.

In Fig. 3 ist das Ventilorgan 16 durch die vermittels der Vorspannanordnung 32 generierte Vorspannkraft in der ersten Bewegungsrichtung R₁ in Richtung zur ersten Ventilstellung vorgespannt, in welcher das erste Ventilelement 20 an dem diesem zugeordneten ersten Ventilsitz 22 aufsitzt. Das zweite Ventilelement 40 ist von dem diesem zugeordneten zweiten Ventilsitz 42 abgehoben, so dass eine Strömungsverbindung zwischen dem ersten Leitungsbereich 14 und dem dritten Leitungsbereich 38 freigegeben ist, während die Strömungsverbindung zwischen dem ersten Leitungsbereich 14 und dem zweiten Leitungsbereich 15 unterbrochen ist. Das Formgedächtnismaterial-Stellorgan 26 ist dabei beispielsweise in axialer Richtung maximal oder nahezu maximal komprimiert. Wird an dieses eine elektrische Spannung angelegt und ein Strom durch dieses hindurchgeleitet, erwärmt es sich, so dass es bei Erreichen der Austenit-Starttemperatur beginnt, sich auszudehnen, und das Ventilorgan 16 entgegen der Vorspannwirkung der Vorspannanordnung 32 in die in Fig. 4 dargestellte zweite Ventilstellung bringt, in welcher das zweite Ventilelement 40 an dem diesem zugeordneten zweiten Ventilsitz 42 aufsitzt, während das erste Ventilelement 20 von dem diesem zugeordneten ersten Ventilsitz 22 abgehoben ist.

Wie in Fig. 4 veranschaulicht, wird dabei die einer jeweiligen Ventilstellung entsprechende Endstellung des Ventilorgans 16 bei dessen Bewegung in Richtung der Bewegungsachse A durch ein am jeweils zugeordneten Ventilsitz 22 bzw. 42 aufsitzendes Ventilelement 20 bzw. 44 definiert, so das beispielsweise durch Zusammenwirkung des Ventilschiebers 18 mit dem Ventilgehäuse 12 oder dem Aktuatorgehäuse 36 definierte Anschläge nicht vorgesehen bzw. erforderlich sind und ein zuverlässiger Abschluss des Strömungswegs durch das jeweils wirksame bzw. auf dem zugeordneten Ventilsitz 22, 42 aufsitzendes Ventilelement 20 oder 40 gewährleistet ist.

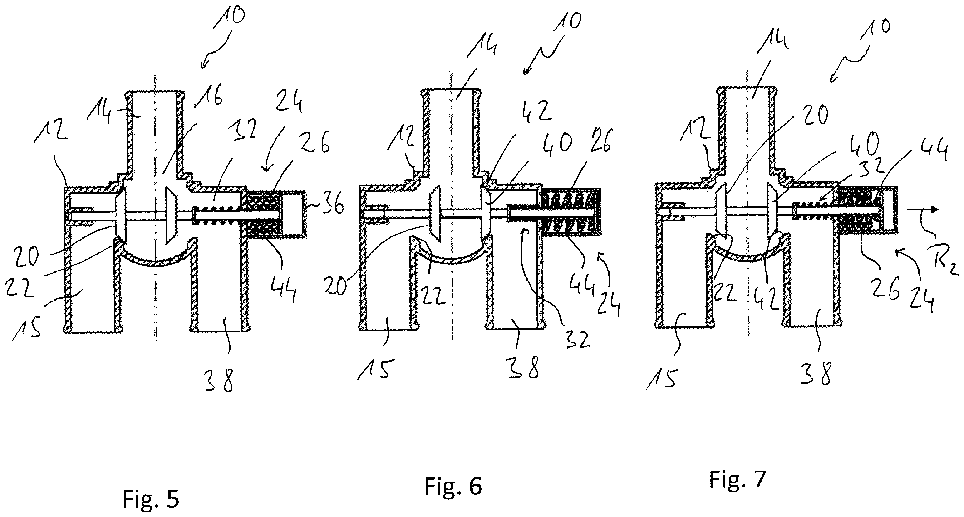

Eine erfindungsgemäße Weiterbildung des in den Fig. 3 und 4 dargestellten Ausgestaltungsbeispiels ist in den Fig. 5 bis 7 gezeigt. Bei dieser Ausgestaltung umfasst die Aktuatoranordnung 24 zwei ineinander geschachtelte, also bezüglich der Bewegungsachse A zueinander koaxial angeordnete Formgedächtnismaterial-Stellorgane 26, 44. Jedes dieser beiden Formgedächtnismaterial-Stellorgane 26, 44 kann unabhängig vom jeweils anderen Formgedächtnismaterial-Stellorgan mit einer elektrischen Spannung beaufschlagt werden, so dass durch Hindurchleiten eines elektrischen Stroms jeweils nur das mit der Spannung beaufschlagte Formgedächtnismaterial-Stellorgan 26 bzw. 44 erwärmt wird. Zu diesem Zwecke kann es vorteilhaft sein, diese beiden Formgedächtnismaterial-Stellorgane 26, 44 bezüglich einander elektrisch isoliert zu halten.

Die Fig. 5 zeigt die erste Ventilstellung, in welcher das erste Ventilelement 20 auf dem diesem zugeordneten ersten Ventilsitz aufsitzt und das zweite Ventilelement 40 von dem diesem zugeordneten zweiten Ventilsitz 42 abgehoben ist, so dass die Strömungsverbindung vom ersten Leitungsbereich 14 zum dritten Leitungsbereich 38 freigegeben ist. Dieser Zustand wird bei nicht aktivierter Aktuatoranordnung 24 durch die vermittels der Vorspannanordnung 32 generierte Vorspannkraft erzeugt. Es besteht eine Strömungsverbindung nur zwischen dem ersten Leitungsbereich 14 und dem dritten Leitungsbereich 38.

Die Fig. 6 zeigt die zweite Ventilstellung, in welcher das zweite Ventilelement 40 auf dem diesem zugeordneten zweiten Ventilsitz 42 aufsitzt und somit das erste Ventilelement 20 den dem diesem zugeordneten ersten Ventilsitz 22 abgehoben ist und somit die Strömungsverbindung vom ersten Leitungsbereich 14 zum zweiten Leitungsbereich 15 freigegeben ist. Um dies zu erreichen, werden beide Formgedächtnismaterial-Stellorgane 26, 44 mit einer elektrischen Spannung beaufschlagt und durch den durch diese hindurchfließenden elektrischen Strom erwärmt, so dass sie in Zusammenwirkung das Ventilorgan 16 entgegen der Vorspannwirkung der Vorspannanordnung 32 in Richtung der Bewegungsachse A in die zweite Ventilstellung bewegen und in dieser halten. In diesem Zustand besteht eine Strömungsverbindung nur zwischen dem ersten Leitungsbereich 14 und dem zweiten Leitungsbereich 15.

In dem in Fig. 7 dargestellten Zustand ist das Ventilorgan 16 in einer dritten Ventilstellung, in welcher keines der Ventilorgane 20, 40 auf dem jeweils zugeordneten Ventilsitz 22, 42 aufsitzt. Beide Ventilelemente 20, 40 sind vom jeweils zugeordneten Ventilsitz 22, 42 abgehoben, so dass eine Strömungsverbindung sowohl vom ersten Leitungsbereich 14 zum zweiten Leitungsbereich 15, als auch vom ersten Leitungsbereich 14 zum dritten Leitungsbereich 38, als auch vom zweiten Leitungsbereich 15 zum dritten Leitungsbereich 38 freigegeben ist.

Diese dritte Ventilstellung kann dadurch erreicht werden, dass im dargestellten Beispiel nur das radial innere Formgedächtnismaterial-Stellorgan 44 erwärmt wird, während das radial äußere Formgedächtnismaterial-Stellorgan 26 nicht bestromt und dadurch auch nicht erwärmt wird. Die Auslegung der beiden Formgedächtnismaterial-Stellorgane 26, 44 ist dabei derart gewählt, dass die durch das Formgedächtnismaterial-Stellorgan 44 erzeugbare und das Ventilorgan 16 in der zweiten Stellrichtung R₂ beaufschlagende Kraft nicht ausreicht, um die Vorspannanordnung 32 in einem über das Ausmaß, welches in Fig. 7 dargestellt ist, hinausgehenden Ausmaß zu komprimieren. Es ist also ein Kräftegleichgewicht zwischen der durch das Formgedächtnismaterial-Stellorgan 44 erzeugten Stellkraft und der durch die stärker komprimierte Vorspannanordnung 32 generierten Vorspannkraft eingestellt. Erst dann, wenn auch das radial äußere Formgedächtnismaterial-Stellorgan 26 bestromt und dadurch erwärmt wird und somit eine zusätzliche in der zweiten Stellrichtung R₂ wirkende Kraft erzeugt wird, kann die Vorspannanordnung 32 weiter komprimiert werden und das Ventilorgan 16 in die in Fig. 6 dargestellte zweite Ventilstellung gebracht werden.

Es ist darauf hinzuweisen, dass der vorangehend mit Bezug auf die Fig. 7 beschriebene Wirkmechanismus, bei welchem durch die beiden Formgedächtnismaterial-Stellorgane 26, 44 das Ventilorgan 16 in unterschiedlichem Ausmaß bewegt werden kann, um, ausgehend von der ersten Ventilstellung, entweder die zweite Ventilstellung oder die zwischen der ersten Ventilstellung und der zweiten Ventilstellung liegende dritte Ventilstellung einzurichten, auch dadurch erreicht werden kann, dass beispielsweise durch unterschiedliche Dimensionierung der beiden Formgedächtnismaterial-Stellorgane 26, 44 in Richtung der Bewegungsachse diese dazu ausgelegt sind, unterschiedlich starke Verschiebungen des Ventilorgans 16 hervorzurufen. Beispielsweise könnte das zum Einrichten der dritten Ventilstellung zu erregende innere Formgedächtnismaterial-Stellorgan 44 kürzer dimensioniert sein, als das äußere Formgedächtnismaterial-Stellorgan 26.

Zum Einrichten der dritten Ventilstellung wird dann nur das innere Formgedächtnismaterial-Stellorgan 44 erregt, so dass dessen maximal hervorrufbare Ausdehnung auch in Abstimmung auf die durch die Vorspannanordnung 32 hervorgerufene Vorspannkraft das Ventilorgan 16 in die dritte Ventilstellung bringt. Soll die zweite Ventilstellung eingerichtet werden, wird beispielsweise dann nur das radial äußere Formgedächtnismaterial-Stellorgan 26 erregt, so dass dieses axial größer dimensionierte bzw. sich stärker ausdehnende Formgedächtnismaterial-Stellorgan 26 dann eine entsprechend stärkere Verschiebung des Ventilorgans 16 bis zu seiner zweiten Ventilstellung hervorrufen kann.

Weiter könnten die beiden Formgedächtnismaterial-Stellorgane 26, 44 derart eingesetzt werden, dass dann, wenn diese unterschiedliche axiale Kräfte bei ihrer axialen Ausdehnung hervorrufen können, insgesamt vier Ventilstellungen eingenommen werden können, nämlich die erste Ventilstellung, wenn keines der Formgedächtnismaterial-Stellorgane erregt wird, die zweite Ventilstellung, wenn beide Formgedächtnismaterial-Stellorgane erregt werden, die dritte Ventilstellung, wenn beispielsweise nur das innere Formgedächtnismaterial-Stellorgan 44 erregt wird, und eine in den Figuren nicht dargestellte vierte Ventilstellung, wenn nur das äußere Formgedächtnismaterial-Stellorgan 26 erregt wird.

Ferner könnten mehr als zwei Formgedächtnismaterial-Stellorgane beispielsweise ineinander geschachtelt vorgesehen sein, so dass beispielsweise auch die dritte Ventilstellung durch die Zusammenwirkung zweier Formgedächtnismaterial-Stellorgane eingestellt werden kann.

Bei einer weiteren Ausgestaltung kann auch die Vorspannanordnung ein oder mehrere Formgedächtnismaterial-Stellorgane umfassen, so dass die beispielsweise das vorangehend beschriebene Ventilorgan in die erste Ventilstellung vorspannende Vorspannkraft durch ein oder mehrere Formgedächtnismaterial-Stellorgane erzeugt werden kann. Diese können beispielsweise nur dann durch Bestromung erwärmt werden, wenn die erste Ventilstellung eingenommen werden soll. Alternativ könnten derartige zum Vorspannen in eine definierte Ventilstellung vorgesehenen Formgedächtnismaterial-Stellorgane auch permanent bestromt werden, um permanent eine derartige Vorspannkraft zu erzeugen.

## Patentansprüche

1. Ventil, insbesondere für einen Wärmeträgermedium-Strömungskreislauf in einem Fahrzeug, umfassend wenigstens ein Ventilorgan (16) und eine dem wenigstens einen Ventilorgan (16) zugeordnete Aktuatoranordnung (24), wobei:
- das wenigstens eine Ventilorgan (16) ein erstes Ventilelement (20) umfasst und in einer ersten Ventilstellung das erste Ventilelement (20) auf einem dem ersten Ventilelement (20) zugeordneten ersten Ventilsitz (22) aufsitzt und in einer zweiten Ventilstellung von dem ersten Ventilsitz (22) abgehoben ist,
- das wenigstens eine Ventilorgan (16) ein zweites Ventilelement (40) umfasst und das zweite Ventilelement (40) in der ersten Ventilstellung von einem dem zweiten Ventilelement (40) zugeordneten zweiten Ventilsitz (42) abgehoben ist und in der zweiten Ventilstellung auf dem zweiten Ventilsitz (42) aufsitzt,
- die Aktuatoranordnung (24) wenigstens ein mit der Form einer Schraubenfeder aufgebautes Formgedächtnismaterial-Stellorgan (26, 44) und eine Vorspanneinheit (32) zum Vorspannen des wenigstens einen Ventilorgans (16) in einer ersten Stellrichtung (R₁) umfasst, wobei das wenigstens eine Ventilorgan (16) durch die Vorspannanordnung (32) in die erste Ventilstellung vorgespannt ist,
**dadurch gekennzeichnet,**
- **dass** die Aktuatoranordnung (24) wenigstens zwei in der Form einer Schraubenfeder aufgebaute und ineinandergeschachtelt angeordnete Formgedächtnismaterial-Stellorgane (26, 44) umfasst,
- **dass** das wenigstens eine Ventilorgan (16) durch die wenigstens zwei Formgedächtnismaterial-Stellorgane (26, 44) zur Bewegung in der gleichen Bewegungsrichtung in unterschiedlichem Bewegungsausmaß beaufschlagbar ist,
- **dass** die wenigstens zwei Formgedächtnismaterial-Stellorgane (26, 44) dazu ausgebildet sind, das wenigstens eine Ventilorgan (16) entgegen der Vorspannwirkung der Vorspanneinheit (32) in einer zweiten Stellrichtung (R₂) zu verstellen.

2. Ventil nach Anspruch 1, **dadurch gekennzeichnet, dass** die Vorspanneinheit (32) wenigstens eine Vorspannfeder (34), vorzugsweise Schraubendruckfeder, umfasst.

3. Ventil nach einem der vorangehenden Ansprüche, **dadurch gekennzeichnet, dass** das wenigstens eine Formgedächtnismaterial-Stellorgan (26, 44) durch Temperaturänderung in seiner Form veränderbar ist.

4. Ventil nach Anspruch 3, **dadurch gekennzeichnet, dass** die Temperatur des wenigstens einen Formgedächtnismaterial-Stellorgans (26, 44) durch Bestromung des wenigstens einen Formgedächtnismaterial-Stellorgans (26, 44) veränderbar ist.

5. Ventil nach Anspruch 3 oder 4, **dadurch gekennzeichnet, dass** das wenigstens eine Formgedächtnismaterial-Stellorgan (26, 44) dazu ausgebildet ist, das wenigstens eine Ventilorgan (16) bei Erwärmung des wenigstens einen Formgedächtnismaterial-Stellorgans (26) in der zweiten Stellrichtung zu verstellen.

6. Ventil nach einem der vorangehenden Ansprüche, **dadurch gekennzeichnet, dass** das wenigstens eine Ventilorgan (16) durch wenigstens eines der Formgedächtnismaterial-Stellorgane (26, 44) in eine dritte Ventilstellung stellbar ist, wobei in der dritten Ventilstellung das erste Ventilelement (20) vom ersten Ventilsitz (22) abgehoben ist und das zweite Ventilelement (40) vom zweiten Ventilsitz (42) abgehoben ist, und dass das wenigstens eine Ventilorgan (16) durch ein anderes der Formgedächtnismaterial-Stellorgane (26, 44) oder durch ein mit dem einen Formgedächtnismaterial-Stellorgan zusammenwirkendes anderes Formgedächtnismaterial-Stellorgan in die zweite Ventilstellung stellbar ist.

7. Ventil nach einem der vorangehenden Ansprüche, **dadurch gekennzeichnet, dass** das wenigstens eine Ventilorgan (16) durch das wenigstens eine Formgedächtnismaterial-Stellorgan (26, 44) linear verschiebbar ist.

## Claims

1. Valve, in particular for a heat transfer medium flow circuit in a vehicle, comprising at least one valve member (16) and an actuator arrangement (24) assigned to the at least one valve member (16), wherein:
- the at least one valve member (16) comprises a first valve element (20) and, in a first valve position, the first valve element (20) is seated on a first valve seat (22) assigned to the first valve element (20) and, in a second valve position, is lifted off the first valve seat (22),
- the at least one valve member (16) comprises a second valve element (40) and the second valve element (40) is lifted off a second valve seat (42) associated with the second valve element (40) in the first valve position and is seated on the second valve seat (42) in the second valve position,
- the actuator arrangement (24) comprises at least one shape memory material actuator (26, 44) constructed with the shape of a helical spring and a biasing unit (32) for biasing the at least one valve member (16) in a first actuating direction (R₁), wherein the at least one valve member (16) is biased into the first valve position by the biasing unit (32),
**characterized in that**
- the actuator arrangement (24) comprises at least two shape memory material actuators (26, 44) which are constructed in the form of a helical spring and are arranged nested in one another,
- the at least one valve member (16) can be acted upon by the at least two shape memory material actuators (26, 44) for movement in the same direction of movement to a different extent of movement,
- the at least two shape memory material actuators (26, 44) are adapted to displace the at least one valve member (16) in a second actuating direction (R₂) opposite to the prestressing action of the biasing unit (32).

2. Valve according to claim 1, **characterized in that** the biasing unit (32) comprises at least one biasing spring (34), preferably a helical compression spring.

3. Valve according to one of the preceding claims, **characterized in that** the at least one shape memory material actuator (26, 44) is variable in shape by temperature change.

4. Valve according to claim 3, **characterized in that** the temperature of the at least one shape memory material actuator (26, 44) is changeable by energizing the at least one shape memory material actuator (26, 44).

5. Valve according to claim 3 or 4, **characterized in that** the at least one shape memory material actuator (26, 44) is adapted to adjust the at least one valve member (16) in the second actuating direction when the at least one shape memory material actuator (26) is heated.

6. Valve according to one of the preceding claims, **characterized in that** the at least one valve member (16) can be adjusted into a third valve position by at least one of the shape memory material actuators (26, 44), wherein in the third valve position the first valve element (20) is lifted off the first valve seat (22) and the second valve element (40) is lifted off the second valve seat (42), and **in that** the at least one valve member (16) is positionable in the second valve position by another one of the shape memory material actuators (26, 44) or by another shape memory material positioning member cooperating with the one shape memory material positioning member.

7. Valve according to one of the preceding claims, **characterized in that** the at least one valve member (16) is linearly displaceable by the at least one shape memory material actuator (26, 44). (26, 44).

## Revendications

1. Vanne, en particulier pour un circuit d'écoulement de fluide caloporteur dans un véhicule, comprenant au moins un organe de vanne (16) et un agencement d'actionneur (24) associé audit au moins un organe de vanne (16), dans laquelle :
- ledit au moins un organe de vanne (16) comprend un premier élément de vanne (20) et, dans une première position de vanne, le premier élément de vanne (20) repose sur un premier siège de vanne (22) associé au premier élément de vanne (20) et, dans une deuxième position de vanne, il est soulevé du premier siège de vanne (22),
- ledit au moins un organe de vanne (16) comprend un deuxième élément de vanne (40) et le deuxième élément de vanne (40) est soulevé d'un deuxième siège de vanne (42) associé au deuxième élément de vanne (40) dans la première position de vanne et repose sur le deuxième siège de vanne (42) dans la deuxième position de vanne,
- l'agencement d'actionneur (24) comprend au moins un organe de réglage en matériau à mémoire de forme (26, 44) construit avec la forme d'un ressort hélicoïdal et une unité de précontrainte (32) pour précontraindre ledit au moins un organe de vanne (16) dans une première direction de réglage (R₁), dans lequel ledit au moins un organe de vanne (16) est précontraint dans la première position de vanne par l'agencement de précontrainte (32),
**caractérisé en ce que**
- le dispositif d'actionneur (24) comprend au moins deux organes de réglage en matériau à mémoire de forme (26, 44) construits sous la forme d'un ressort hélicoïdal et disposés l'un dans l'autre,
- ledit au moins un organe de vanne (16) peut être sollicité par lesdits au moins deux organes de réglage en matériau à mémoire de forme (26, 44) pour se déplacer dans la même direction de mouvement avec une ampleur de mouvement différente,
- lesdits au moins deux organes de réglage en matériau à mémoire de forme (26, 44) sont adaptés pour déplacer ledit au moins un organe de vanne (16) dans une deuxième direction de réglage (R₂), à l'encontre de l'effet de précontrainte de l'unité de précontrainte (32).

2. Vanne selon la revendication 1, **caractérisée en ce que** l'unité de précontrainte (32) comprend au moins un ressort de précontrainte (34), de préférence un ressort de compression hélicoïdal.

3. Vanne selon l'une des revendications précédentes, **caractérisée en ce que** ledit au moins un organe de réglage en matériau à mémoire de forme (26, 44) est modifiable en forme par variation de température.

4. Vanne selon la revendication 3, **caractérisée en ce que** la température dudit au moins un organe de réglage en matériau à mémoire de forme (26, 44) est modifiable par alimentation électrique dudit au moins un organe de réglage en matériau à mémoire de forme (26, 44).

5. Vanne selon la revendication 3 ou 4, **caractérisée en ce que** ledit au moins un organe de réglage en matériau à mémoire de forme (26, 44) est adapté pour déplacer ledit au moins un organe de vanne (16) dans la deuxième direction de réglage lors de l'échauffement dudit au moins un organe de réglage en matériau à mémoire de forme (26).

6. Vanne selon l'une des revendications précédentes, **caractérisée en ce que** ledit au moins un organe de vanne (16) peut être réglé dans une troisième position de vanne par au moins l'un des organes de réglage en matériau à mémoire de forme (26, 44), dans laquelle, dans la troisième position de vanne, le premier élément de vanne (20) est soulevé du premier siège de vanne (22) et le deuxième élément de vanne (40) est soulevé du deuxième siège de vanne (42), et **en ce que** ledit au moins un organe de vanne (16) peut être réglé dans la deuxième position de vanne par un autre des organes de réglage en matériau à mémoire de forme (26, 44) ou par un autre organe de réglage de matériau à mémoire de forme coopérant avec ledit organe de réglage de matériau à mémoire de forme.

7. Vanne selon l'une des revendications précédentes, **caractérisée en ce que** ledit au moins un organe de vanne (16) peut être déplacé linéairement par ledit au moins un organe de réglage en matériau à mémoire de forme (26, 44).
